# EUROPÄISCHE PATENTSCHRIFT

(11) **EP 0 673 557 B1**
(45) Veröffentlichungstag und Bekanntmachung des Hinweises auf die Patenterteilung: **17.12.1997**
(21) Anmeldenummer: 94927466.6
(22) Anmeldetag: 04.10.1994
(51) Int. Cl.: H02J 9/00, H04N 5/63, G05F 1/44

(54) **STROMVERSORGUNG VON BEREITSCHAFTSSCHALTUNGEN VON ELEKTRISCHEN GERÄTEN**
POWER SUPPLY FOR STANDBY CIRCUITS OF ELECTRICAL DEVICES
ALIMENTATION POUR CIRCUITS DE VEILLE D'APPAREILS ELECTRIQUES

(30) Priorität: 12.10.1993 CH 3066/93
(43) Veröffentlichungstag der Anmeldung: 27.09.1995
(73) Patentinhaber: Fischer, Helmut, CH-8500 Frauenfeld (CH)
(72) Erfinder: BIRCHER, Anton, CH-6373 Ennetbürgen (CH)
(74) Vertreter: Feldmann, Clarence Paul
(86) Internationale Anmeldenummer: CH9400197
(87) Internationale Veröffentlichungsnummer: WO9510875

(56) Entgegenhaltungen:
- DE-C- 4 240 351
- GB-A- 2 144 932
- US-A- 3 940 684
- US-A- 4 709 200

## Beschreibung

Die Erfindung betrifft eine Stromversorgung für Bereitschaftsschaltungen von elektrischen Verbrauchern nach dem Oberbegriff des unabhängigen Patentanspruches.

Viele Geräte in der Unterhaltungselektronik und Industrie (Fernseher, Radio, Tonband, Drucker, Fotokopierer, Maschinen usw.) weisen heute eine Bereitschaftschaltung, auch unter dem Begriff Stand-by Schaltung, auf. Diese Geräte sind dauernd in Bereitschaft. Die Bereitschaftsschaltungen weisen oft eine Signalüberwachung für Funktionssignale auf. Dies kann ein Bedienungstableau oder ein Fernsteuerempfänger sein. Die Signalüberwachung ist mit einem Schalter gekoppelt, welcher das Gerät in Betrieb setzt oder zurück in den Bereitschaftszustand. Um den Empfänger einer Fernsteuerung 2 Stunden im Tag aktiv zu halten, wird auch heute noch relativ viel Energie benötigt, da er dauernd via Netzteil ans Netz geschaltet ist.

Das gleiche Problem stellt sich auch bei den verschiedensten Arten von Ueberwachungsanlagen, Personenerkennung usw. und ebenfalls bei Batterieladegeräten.

Ein Fernseher oder eine Stereoanlage verbraucht beispielsweise im Standby-Modus 7 bis 10 W. Ausserhalb einer durchschnittlichen angeschalteten Betriebszeit von 3 Stunden pro Tag werden somit (21 Stunden X 7 W) 147 Wh für die Bereitschaft des Empfängers allein verbraucht. Das ergibt ein Total von mindestens 53 KW/h pro Jahr pro Gerät.

Weil ein Steuergerät eine Ueberwachung rund um die Uhr gewährleistet, bleiben verschiedene Geräte oft auch bei längerer Abwesenheit ans Netz gekoppelt. Auch bei unbelasteten primärgetakteten Netzgeräten bleibt diese Netzverbindung bestehen. Dies verursacht unnötige Störungen durch Phasenanschnitt und bringt nebst grossem Stromverbrauch auch sicherheitstechnische Gefahren mit sich, beispielsweise Blitzschäden, Stromstoss durch Berührung, Kurzschlüsse durch Wasserschäden.

Der Betrieb von Solarrechnern oder Uhren zeigt jedoch schon heute, dass ohne Netzenergie sogar bei künstlichem Licht beachtliche Funktionen erfüllt werden können. Umfragen unter der Bevölkerung haben immer wieder gezeigt, dass man zwar bereit ist, Energie zu sparen, jedoch auf einen gewissen Lebensstandard nicht verzichten möchte. Das bedeutet, dass vorgängig beschriebene Mängel mit Hilfe der Technik gelöst werden müssen.

Aufgabe der Erfindung ist es, eine sparsame Stromversorgung für Bereitschaftsschaltungen von elektrischen Verbrauchern, wie Fernsteuerempfängern, Ueberwachungsanlagen, Batterieladegeräten und dergleichen, anzugeben, welche ohne Netzenergie betrieben und nur dann an das Netz geschaltet werden, wenn dies von einem angeschlossenen Verbraucher gefordert wird.

Diese Aufgabe wird durch die in den Patentansprüchen angegebene Erfindung gelöst.

Die Stromversorgung gemäss Erfindung wird nachstehend im Zusammenhang mit den Zeichnungen beschrieben. Es zeigen:
Figur 1 ein Prinzipschema der gesteuerten Stromversorgung
Figur 2 ein Schaltungsbeispiel dazu.

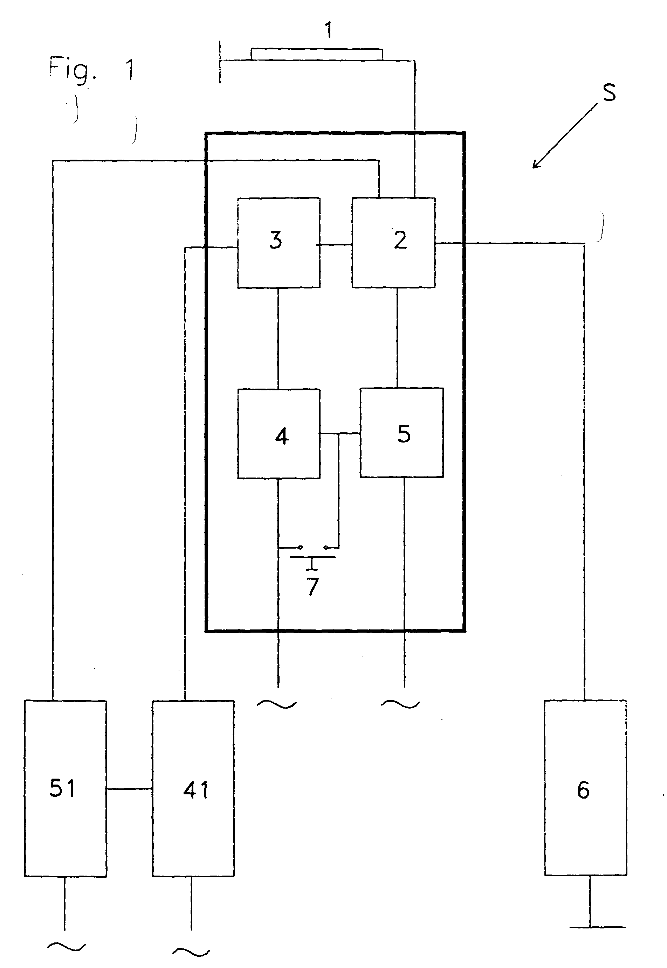

Stromversorgung S von Bereitschaftsschaltungen von elektrischen Geräten nach Figur 1 weist ein Netzteil 5, ein Speicherelement 2, einen, den Ladezustand des Speicherelementes 2 überwachenden Spannungsdetektor 3, und einen vom Spannungsdetektor 3 gesteuerten Optokoppler-Triac 4 auf, mittels welchem das Netzteil 5 vom Netz abtrennbar ist.

Der Sekundärausgang des Netzteils 5 ist mit dem Speicherelement 2 verbunden. Eins Spannungsdetektor 3 kontrolliert den Ladezustand des Speicherelementes 2 und schaltet wenn nötig den Opto-Triac 4 ein. Das Speicherelement 2 kann mit einer alternativen Spannungsquelle 1 verbunden sein. Vom Speicherelement 2 gespiesen ist ein Verbraucher 6. Dieser Verbraucher 6 kann ein elektrisches Gerät selbst, eine Fernsteuerung oder ein Bedienungstableau mit Bedienungsschaltern für elektrische Geräte sein. Parallel zum Netzteil 5 der Stromversorgung für Bereitschaftsschaltungen kann ein Leistungsnetzteil 51 in analoger Weise mit dem Speicherelement 2 über einen Triac 41 verbunden und geschaltet sein. Ein Ueberbrückungsschalter 7 ist am Netzteil 5 so angeordnet sein, dass damit der Optokoppler-Triac 4 auch von Hand überbrückbar ist.

Das Speicherelement 2, insbesondere ein Akkumulator oder ein Kondensator, wird von einem sparsamen Spannungsdetektor 3 überwacht. Das Netzteil 5, beispielsweise ein AC/DC - Wandler, wird nur dann ans Netz gekoppelt, wenn eine entsprechende Last Energie verlangt. Eine unbelastete Stromversorgung S verbraucht somit grundsätzlich keine Energie vom Netz, wird jedoch für die Sicherung der Bereitschaft über das Netzteil 5 interruptmässig gespiesen.

Mit der Stromversorgung S kann ein Verbraucher 6 verbunden sein. Dabei wird dieser Verbraucher 6 durch das Speicherelement 2 gespiesen. Er benötigt somit im Bereitschaftszustand keine Energie aus dem Netz, spart dadurch eine riesige Menge Energie und stellt daher keine sicherheitstechnische Gefahrenquelle dar.

Vorteilhaft wird das Netzteil 5 mittels einem Opto-Koppler, wie beispielsweise einem Optokoppler-Triac 4, zugeschaltet. Damit kann eine galvanische Trennung zwischen Netz und Steuerung von Stromversorgung S gewährleistet werden.

Eine weitere Ausführungsform einer solchen Stromversorgung S für eine Bereitschaftsschaltung weist eine alternative Spannungsquelle 1 zur Stützung des Speicherelementes 2 auf. Dabei liefert die alternative Spannungsquelle 1, beispielsweise eine Solarzelle, die Energie für die Stromversorgung S der Bereitschaftsschaltung. Die überschüssige Energie wird im Speicherelement 2 gespeichert. Der Spannungsdetektor 3 überwacht die Spannung am Speicherelement 2. Der äusserst geringe Betriebsstrom für den Spannungsdetektor 3 und, falls vorhanden, den Verbraucher 6, wird vom Speicherelement 2, respektive von der alternativen Spannungsquelle 1, bezogen. Sinkt die Spannung am Speicherelement 2 unter einen bestimmten Wert, so wird vom Spannungsdetektor 3 via Optokoppler-Triac 4 das Netzteil 5 eingschaltet, bis das Speicherelement 2 wieder genügend geladen ist. Ein Hysterese-Eingang des Spannungsdetektors erlaubt eine tolerierbare Spannungsschwankung am Speicherelement 2 zu definieren. Dies bewirkt, dass die alternative Spannungsquelle 1 innerhalb eines gewissen Spielraumes arbeiten kann. Wird beispielsweise eine Solarzelle für die Ladung des Speicherelementes 2 verwendet, muss bei veränderlichen Lichtverhältnissen nicht dauernd das Netzteil 5 ein und ausgeschaltet werden. Es empfiehlt sich, Speicherelement 2 und alternative Spannungsquelle 1 auf den Energieverbrauch des Verbrauchers 6 abzustimmen. Die erfindungsgemässe Stromversorgung S arbeitet jedoch auch bei nicht oder schlecht abgestimmten Elementen äusserst sparsam und stellt nur den wirklich benötigten Strom aus dem Netz zur Verfügung.

Der Impulstaster 7 garantiert jederzeit ein Neustarten der erfindungsgemässen Stromversorgung. Dies ist bei Ausfällen durch Beschädigung von Bauteilen, bei Kurzschluss, nach Reparaturen oder bei Austausch der Speicherelemente und ähnlichen vorfällen wichtig. Zusätzlich kann die Stromversorgung S auch ohne alternative Spannungsquelle 1 betrieben werden. Mit dem Impulstaster 7 wird der Optokoppler-Triac 4 überbrückt, bis das Speicherelement 2 genügend geladen ist und die automatische Funktion aufnehmen kann. So kann die Stromversorgung S auch bei allenfalls leerem Speicherelement 2 gestartet werden.

Nach einem weiteren Erfindungsgedanken kann diese Stromversorgung S auch als Akku-Ladegerät verwendet werden. Das Speicherelement 2 kann den Lastverhältnissen angepasst werden. Bei der Verwendung der erfindungsgemässen Schaltung als Akkuüberwachung kann das Speicherelement 2 gar die Last, also den zu ladenden Akku selbst darstellen. Der äusserst sparsame Spannungsdetektor 3 kann in diesem Fall auch ohne Solarmodul, direkt mit der zu überwachenden Batteriespannung betrieben werden. Sobald die Batteriespannung das gesetzte Limit unterschreitet, liefert das Netzteil 5 den Ladestrom. Das bedeutet, dass Akku-Ladegeräte keinen Stand-by Strom benötigen.

Zusätzlich kann der Ausgangsstrom des Netzteiles 5 mit einem Widerstand begrenzt werden. Damit kann einerseits die Einschaltzeit desselben beeinflusst, andererseits die angeschlossene Last geschützt werden. Diese Strombegrenzung verhindert Schäden durch allfällige Kurzschlüsse.

Durch die Verwendung eines Dual-Spannungsdetektors als Spannungsdetektor 3 wird in einer weiteren Ausführungsform ermöglicht, einen zweiten Triac 41 oder ein Relais 41' anzusteuern. Dadurch kann die erfindungsgemässe Stromversorgung S zusätzlich einen Leistungsstromkreis mit separatem Leistungsnetzteil 51 steuern. Sobald ein Verbraucher 6 soviel Strom verbraucht, dass das Netzteil 5 nicht genügt, sinkt die Spannung am Speicher 2 weiter ab, bis unter ein bestimmtes Niveau. Der Spannungsdetektor 3 stellt dies fest und schaltet in analoger Weise das Leistungsnetzteil 51 ein. Auch dieses ist somit nur solange seine Leistung benötigt wird ans Netz geschaltet.

Der Dual-Spannungsdetektor kann natürlich auch zur Ueberwachung von zwei unabhängigen Speicherelementen verwendet werden. Diese weitere Ausführungsform kann sich als sehr nützlich erweisen, wenn eine Last mit unterschiedlichen Strömen betrieben wird, wie dies beispielsweise bei Funkgeräten, Verstärkern, Netzgeräten und dergleichen der Fall ist.

Der Triac 41 kann selbstverständlich mit einer Null-Durchgansschaltung versehen sein. Dadurch werden Netzstörungen durch Phasenanschnitt vermieden.

Sofern der Verbraucher 6 eine Steuerung eines anderen Verbrauchers, beispielsweise eine Fernsteuerung, ist, kann die Schaltung so ausgeführt werden, dass der Triac 41 oder das Relais 41' und damit das Leistungsnetzteil von der Fernsteuerung und nicht vom Spannungsdetektor geschaltet wird.

Ein sicherheitstechnischer Vorteil kann erreicht werden, indem das Netzteil wasserfest isoliert aufgebaut wird. Ein solcher isolierter Teil kann zusätzlich sowohl einen Trenntrafo als auch den Optokoppler 4 beinhalten.

Ferner ist die Möglichkeit geboten, dass ein Energiemehrverbrauch vom Netz, mit einem AC/DC - Wandler und/oder einer zusätzlichen DC Quelle ausgeglichen werden kann.

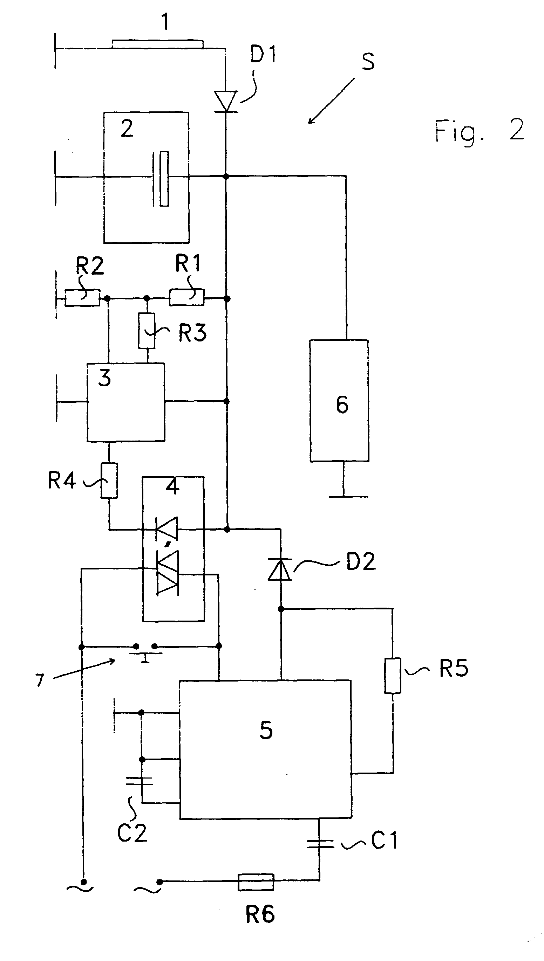

In Figur 2 ist ein Schaltungsbeispiel einer erfindungsgemässen Stromversorgung S dargestellt. Das Speicherelement 2 ist mit seiner positiven Seite einerseits über eine Diode D1 mit der positiven Seite einer alternativen Spannungsquelle 1, hier einem Solargenerator, und andererseits über eine weitere Diode D2 mit der positiven Seite des Netzteiles 5 verbunden. Der Verbraucher 6 ist direkt an das Speicherelement 2 geschaltet. Der Optokoppler-Triac 4 ist mit seinem Steuerteil zwischen den Ausgang des Spannungsdetektors und die positive Seite des Speicherelementes 2 geschaltet. Sein Schaltteil befindet sich im Primärstromkreis des Netzteiles 5 und mit dem parallel dazu geschalteten Impulstaster 7 überbrückbar. Die negativen Seiten der alternativen Spannungsquelle 1, des Speicherelementes 2 und des Spannungsdetektores 3 sind miteinander verbunden. Diese funktionellen Elemente sind nach bekannter Art mit Widerständen R1 bis R6 und Kondensatoren C1 und C2 angepasst.

## Patentansprüche

1. Stromversorgung (S) für Bereitschaftsschaltungen von elektrischen Verbrauchern (6), mit einem Netzteil (5), dadurch gekennzeichnet, dass die Stromversorgung (S) ein den Verbraucher speisendes Speicherelement (2), einen, den Ladezustand des Speicherelementes (2) überwachenden Spannungsdetektor (3), und einen vom Spannungsdetektor (3) gesteuerten Optokoppler-Triac (4) umfasst, mittels welchem das Netzteil (5) ans Netz schaltbar ist, wobei der Optokoppler-Triac(4) mittels einem Impulstaster (7) überbrückbar ist.

2. Stromversorgung (S) nach Anspruch 1, dadurch gekennzeichnet, dass das Speicherelement (2) ein Akkumulator ist.

3. Stromversorgung (S) nach Anspruch 1, dadurch gekennzeichnet, dass das Speicherelement (2) ein Kondensator ist.

4. Stromversorgung (S) nach einem der Ansprüche 2 oder 3, dadurch gekennzeichnet, dass eine Strombegrenzung zwischen Netzteil (5) und Speicherelement (2) geschaltet ist.

5. Stromversorgung (S) nach einem der Ansprüche 2 oder 3, dadurch gekennzeichnet, dass sie ein zweites, über einen zweiten Triac (41) oder ein Relais (41') mit dem Netz verbindbares Leistungsnetzteil (51) enthält.

6. Stromversorgung (S) nach einem der Ansprüche 2 oder 3, dadurch gekennzeichnet, dass eine alternative Spannungsquelle (1) mit dem Speicherelement (2) verbunden ist.

7. Stromversorgung (S) nach einem der Ansprüche 1 bis 6, dadurch gekennzeichnet, dass der Spannungsdetektor ein Dual-spannungsdetektor ist.

8. Verwendung der Stromversorgung (s) nach einem der Ansprüche 1 bis 6 als Akku-Ladegerät.

9. Verwendung der Stromversorgung (S) nach einem der Ansprüche 1 bis 6, zur Versorgung eines Empfängers einer Fernsteuerung.

10. Stromversorgung (S) nach Anspruch 7, dadurch gekennzeichnet, dass das Leistungsnetzteil (51) mittels des Triacs (41) oder des Relais (41') vom Empfänger steuerbar ist.

## Claims

1. Power supply (S) for stand-by circuits of electric loads (6), having a supply unit (5), characterized in that the power supply (S) comprises a load-supplying storage element (2), a voltage detector (3) monitoring the charging state of the storage element (2), and an optocoupler triac (4) controlled by the voltage detector (3), by means of which the supply unit (5) can be connected to the mains, the optocoupler triac (4) being bridgeable by means of a pulse probe (7).

2. Power supply (S) according to claim 1, characterized in that the storage element (2) is an accumulator.

3. Power supply (S) according to claim 1, characterized in that the storage element (2) is a capacitor.

4. Power supply (S) according to one of the claims 2 or 3, characterized in that a current limiting means is connected between the supply unit (5) and the storage element (2).

5. Power supply (S) according to one of the claims 2 or 3, characterized in that it contains a second power pack (51) connectable to the mains across a second triac (41) or a relay (41').

6. Power supply (S) according to one of the claims 2 or 3, characterized in that an alternative voltage source (1) is connected to the storage element (2).

7. Power supply (S) according to one of the claims 1 to 6, characterized in that the voltage detector is a dual voltage detector.

8. Use of the power supply (S) according to one of the claims 1 to 6 as an accumulator charger.

9. Use of the power supply (S) according to one of the claims 1 to 6, for the supply of a receiver of a remote control.

10. Power supply (S) according to claim 7, characterized in that the power pack (51) is controllable by the receiver by means of the triac (41) or the relay (41').

## Revendications

1. Alimentation (S) en courant électrique pour des montages de mise en veille d'utilisateurs électriques (6), comprenant un bloc secteur (5), caractérisée en ce que l'alimentation (S) en courant électrique comprend un élément d'accumulation (2) alimentant l'utilisateur, un détecteur de tension (3) surveillant l'état de charge de l'élément accumulateur (2), et un triac de couplage optoélectronique (4), commandé par le détecteur de tension (3) et au moyen duquel le bloc secteur (5) peut être branché sur le secteur, le triac de couplage optoélectronique (4) pouvant être court-circuité au moyen d'un commutateur d'impulsions à touche (7).

2. Alimentation (S) en courant électrique selon la revendication 1, caractérisée en ce que l'élément d'accumulation (2) est un accumulateur.

3. Alimentation (S) en courant électrique selon la revendication 1, caractérisée en ce que l'élément d'accumulation (2) est un condensateur.

4. Alimentation (S) en courant électrique selon la revendication 2 ou 3, caractérisée en ce qu'une limitation de courant est montée entre le bloc secteur (5) et l'élément d'accumulation (2).

5. Alimentation (S) en courant électrique selon la revendication 2 ou 3, caractérisée en ce qu'elle comprend un deuxième bloc secteur, de puissance (51), qui peut être relié au secteur par l'intermédiaire d'un deuxième triac (41) ou d'un relais (41').

6. Alimentation (S) en courant électrique selon la revendication 2 ou 3, caractérisée en ce qu'une source de tension alternative (1) est reliée à l'élément d'accumulation (2).

7. Alimentation (S) en courant électrique selon une des revendications 1 à 6, caractérisée en ce que le détecteur de tension est un détecteur de tension dual.

8. Utilisation de l'alimentation (S) en courant électrique selon une des revendications 1 à 6 comme chargeur de batterie.

9. Utilisation de l'alimentation (S) en courant électrique selon une des revendications 1 à 6 pour l'alimentation d'un récepteur d'une télécommande.

10. Alimentation (S) en courant électrique selon la revendication 7, caractérisée en ce que le bloc secteur de puissance (51) peut être commandé par le récepteur par l'intermédiaire du triac (41) ou du relais (41').
